# EUROPÄISCHE PATENTSCHRIFT

(11) **EP 4 114 141 B1**
(45) Veröffentlichungstag und Bekanntmachung des Hinweises auf die Patenterteilung: **19.11.2025**
(21) Anmeldenummer: 22179890.3
(22) Anmeldetag: 20.06.2022
(51) Int. Cl.: H05B 6/06

(54) **VERFAHREN ZUM BETRIEB EINES INDUKTIONSKOCHFELDS UND INDUKTIONSKOCHFELD**
METHOD FOR THE OPERATION OF AN INDUCTION HOB AND INDUCTION HOB
PROCÉDÉ PERMETTANT DE FAIRE FONCTIONNER UNE PLAQUE DE CUISSON À INDUCTION ET PLAQUE DE CUISSON À INDUCTION

(30) Priorität: 01.07.2021 DE 102021206947
(43) Veröffentlichungstag der Anmeldung: 04.01.2023
(73) Patentinhaber: E.G.O. Elektro-Gerätebau GmbH, 75038 Oberderdingen (DE)
(72) Erfinder: Fricker, Raphael, 75177 Pforzheim (DE); Weiß, Steffen, 75038 Oberderdingen (DE)
(74) Vertreter: Patentanwälte Ruff, Wilhelm, Beier, Dauster & Partner mbB

(56) Entgegenhaltungen:
- EP-A1- 2 981 154
- EP-A1- 3 749 056
- EP-A2- 3 614 796
- DE-A1- 102018 221 521
- US-A1- 2017 079 093

## Beschreibung

### ANWENDUNGSGEBIET UND STAND DER TECHNIK

Die Erfindung betrifft ein Verfahren zum Betrieb eines Induktionskochfelds, insbesondere mit speziell ausgebildeten Kochgefäßen. Ebenso betrifft die Erfindung ein zu dessen Durchführung ausgebildetes Induktionskochfeld.

Aus der DE 10 2004 016 631 A1 ist eine Anordnung bekannt, mit der das Aufsetzen eines Kochgefäßes sowie dessen Position an einer Heizeinrichtung bzw. einen Heizbereich bei einem Kochfeld erkannt werden kann. Hier sind mehrere kapazitiv wirkende Sensoren vorgesehen im Außenbereich einer Heizeinrichtung.

Aus der DE 10 2018 221 521 A1 ist ein Induktionskochfeld mit Induktionsheizspulen bekannt mit einer Codierung zum Übertragen von Energie in einem Muster von den Induktionsheizspulen an ein möglicherweise darüber aufgestelltes Kochgefäß. Das Kochgefäß weist eine Sendevorrichtung auf, die diese Energie erkennen kann und gegebenenfalls ein spezifisches Signale oder eine Abfolge mehrere Signale entsprechend der empfangenen Codierung aussendet an eine Steuerung des Induktionskochfelds. So kann eine Zuordnung einer bestimmten Induktionsheizspule zu einem darüber aufgestellten Kochgefäß vorgenommen werden.

Aus der EP 2 981 154 A1 ist ein weiteres Induktionskochfeld mit Induktionsheizspulen bekannt, wobei zusätzlich noch drei Erkennungsspulen pro Induktionsheizspule vorgesehen sind. Diese Erkennungsspulen erzeugen ein eigenes Feld, das durch ein darüber aufgestelltes Kochgefäß bedämpft wird bzw. verändert wird. Aus der gesamten Veränderung der Felder aller Erkennungsspulen kann geschlossen werden, ob und ggf. wo ein Kochgefäß aufgestellt ist.

Aus der EP 3 749 056 A1 ist ein Kochsystem bekannt mit einem Induktionskochfeld mit vier Induktionsheizspulen, welche teils zum induktiven Heizen verwendet werden und teils zum Aussenden von Zuordnungssignalen. Ein darüber aufgestelltes Kochgefäß weist eine Empfangseinrichtung auf, um zu erkennen, welcher Induktionsheizspule ein von der Empfangseinrichtung erfasstes Zuordnungssignal zugeordnet werden soll. So kann festgestellt werden, über welcher Induktionsheizspule das Kochgefäß aufgestellt ist. Dann kann dieses spezifische Kochgefäß wunschgemäß beheizt werden.

Aus der EP 3 614 796 A2 und aus der US 2017/079093 A1 sind weitere Induktionskochfelder bekannt, mit denen aufgestellte Kochgefäße bezüglich ihrer Position und bezüglich ihrer individuellen Kennung eindeutig identifiziert werden können. Dabei weisen die aufgestellten Kochgefäße jeweils eine Elektronik mit Sendeeinrichtung und Sensoren auf.

### AUFGABE UND LÖSUNG

Der Erfindung liegt die Aufgabe zugrunde, ein eingangs genanntes Verfahren sowie ein zu dessen Durchführung ausgebildetes Induktionskochfeld zu schaffen, mit denen Probleme des Standes der Technik beseitigt werden können und es insbesondere möglich ist, sowohl das Aufsetzen eines Kochgefäßes auf oder in einen Heizbereich als auch eine Identität des Kochgefäßes sicher erkennen und einer Bedienperson gegebenenfalls anzeigen zu können.

Gelöst wird diese Aufgabe durch ein Verfahren mit den Merkmalen des Anspruchs 1 sowie durch ein Induktionskochfeld mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Induktionskochfeld beschrieben und erläutert. Sie sollen jedoch unabhängig davon sowohl für das Verfahren als auch für das Induktionskochfeld selbstständig und unabhängig voneinander gelten können.

Für das Verfahren zum Betrieb eines Induktionskochfelds mit mehreren Induktionsheizspulen ist vorgesehen, dass jede Induktionsheizspule einen Heizbereich aufweist. Dieser wird im Wesentlichen von der Fläche darüber entsprechend der Größe der Induktionsheizspule gebildet. Ein Kochgefäß kann so auf dem Induktionskochfeld angeordnet werden, dass es mindestens einen Heizbereich überdeckt, vorteilhaft nur einen einzigen Heizbereich einer Induktionsheizspule. Jede Induktionsheizspule ist dazu ausgebildet, Energie zum Beheizen eines Kochgefäßes im Heizbereich zu übertragen, wobei sie dazu auf bekannte Art und Weise von einem Umrichter angesteuert wird. Jedes Kochgefäß weist eine Sendevorrichtung mit Sendeantenne auf zum Senden eines Signals, das abhängt von empfangener Energie bzw. von der Art der übertragenen Energie von einer Induktionsheizspule, deren Heizbereich das Kochgefäß zumindest teilweise überdeckt. Vorteilhaft überdeckt dieses Kochgefäß den Heizbereich weitgehend oder vollständig.

Es ist eine Empfangseinrichtung vorgesehen ist zum Empfangen von Signalen einer Sendevorrichtung eines Kochgefäßes bzw. aller Sendevorrichtungen von Kochgefäßen auf dem Induktionskochfeld. Diese Empfangseinrichtung kann am Induktionskochfeld vorgesehen sein, alternativ oder zusätzlich an einer externen Bedieneinrichtung oder einem mobilen Endgerät.

Es ist eine Steuerung vorgesehen, die die Signale von der Empfangseinrichtung erhält und die Informationen zu einem Senden bzw. Übertragen von Energie der Induktionsheizspulen aufweist oder erhält. Diese Steuerung kann ähnlich wie die Empfangseinrichtung am Induktionskochfeld vorgesehen sein, alternativ oder zusätzlich an einer externen Bedieneinrichtung oder einem mobilen Endgerät. Bevorzugt sind Empfangseinrichtung und Steuerung gemeinsam bzw. im selben Gerät angeordnet.

Das Verfahren weist die folgenden Schritte auf:
Mindestens ein Kochgefäß wird über einem Heizbereich einer Induktionsheizspule angeordnet, vorteilhaft genau ein Kochgefäß für genau einen Erkennungsvorgang. Dies kann bei ausgeschaltetem oder bei eingeschaltetem Induktionskochfeld erfolgen, ebenso bei bereits betriebenem bzw. heizendem Induktionskochfeld. Eine Vielzahl der Induktionsheizspulen, insbesondere alle Induktionsheizspulen, werden angesteuert zum Senden bzw. Übertragen von Energie in einem Muster, wobei dabei Dauer und/oder Amplitude variiert werden als Codierung. Die Codierung besteht darin, dass die Amplitude der gesendeten bzw. übertragenen Energie innerhalb der Codierung über der Zeit variiert, insbesondere zwischen Null und einem Codier-Maximalwert variiert, und/oder die Dauer der Energieübertragung variiert, und/oder die Dauer zwischen zwei Energieübertragungen variiert, und/oder die Anzahl der Energieübertragungen variiert. Diese Möglichkeiten können einzeln oder auch kombiniert verwendet werden, wobei dies auch von der Anzahl der benötigten Codierungen bzw. der abzuprüfenden Induktionsheizspulen abhängt. Dabei erfolgt ein Senden bzw. ein Übertragen von Energie als Codierung mit einer Frequenz von mindestens 50 kHz, vorzugsweise von mindestens 75 kHz bis 150 kHz. Eine Codierung weist dabei mindestens eine Folge von mindestens zwei Pulsen von Energie auf, vorteilhaft genau drei Pulse oder genau vier Pulse, und bildet somit eine Pulsfolge, sodass eine Pulsfolge aus mindestens zwei Pulsen besteht. Vorteilhaft weist eine Codierung mindestens zwei Pulsfolgen bzw. Folgen von Pulsen auf, vorteilhaft genau drei oder genau vier Pulsfolgen. Ein solcher Puls von Energie bedeutet einen raschen Anstieg und einen raschen Abfall von Energie in kurzer Zeit bzw. für eine Pulsdauer. Der Vorteil einer Verwendung von Pulsfolgen mit jeweils mindestens zwei Pulsen besteht darin, dass die entnommene Energie aus einem Zwischenkreis der Ansteuerung der Induktionsheizspule leichter kontrolliert werden kann. Des Weiteren kann eine Geräuschentwicklung am Induktionskochfeld reduziert werden. Eine Information bzw. Codierung über eine bestimmte Induktionsheizspule kann mit unterschiedlichen Parametern wie Pulsweite, Pulsdauer, Frequenz, Anzahl der Pulse odgl. codiert werden, um so eine Dauer bis zur eindeutigen Ermittlung der bestimmten Induktionsheiz spule, über der sich das Kochgefäß befindet, verkürzen zu können. So kann bereits jede Pulsfolge für sich ausreichen, die Induktionsheizspule zu identifizieren. Bevorzugt kann eine Dauer eines Pulses bzw. die Pulsdauer innerhalb einer Pulsfolge verändert werden, beispielsweise beim Anfahren einer PWM-Steuerung für die Induktionsheizspule. So kann eine Geräuschentwicklung reduziert werden.

Überdeckt ein Kochgefäß einen Heizbereich einer Induktionsheizspule, die Energie mit einer bestimmten bzw. individuellen Codierung übertragen hat, so sendet die Sendevorrichtung des Kochgefäßes an die Empfangseinrichtung ein Signal oder eine Abfolge mehrerer Signale, die eindeutig von dieser empfangenen Codierung abhängen und/oder die zu genau dieser empfangenen Codierung zuordenbar sind. Die Steuerung erhält die von der Empfangseinrichtung empfangenen Signale und vergleicht diese mit Informationen über die von den Induktionsheizspulen gesendeten bzw. übertragenen Energie als Codierungen, die die Steuerung kennt. So kann sie ermitteln, welche Codierung von übertragener Energie von einer bestimmten Induktionsheizspule zu einem empfangenen Signal oder einer Abfolge mehrerer Signale passt, wobei das Signal zum selben Zeitpunkt oder kurz danach empfangen worden ist. Darauf aufbauend kann die Steuerung eine Zuordnung dieses Signals oder diese Abfolge mehrerer Signale sendenden Kochgefäßes zu dem Heizbereich bzw. zu der zu dem Heizbereich zugehörigen Induktionsheizspule vornehmen, da ja klar ist, dass das Kochgefäß nur von der darunter angeordneten Induktionsheizspule die das Signal bestimmende Codierung empfangen haben kann. So kann die Steuerung bestimmen, dass dieses Kochgefäß den Heizbereich dieser Induktionsheizspule überdeckt. Alternativ kann bei der Erfindung auch grundsätzlich die Ermittlung der sendenden Induktionsheizspule bzw. die Bestimmung der Zuordnung des Kochgefäßes zu der Induktionsheizspule auch im Kochgefäß selbst stattfinden, beispielsweise in einem integrierten Schaltkreis bzw. einem Mikrocontroller des Kochgefässes. Eine Information darüber wird dann vorteilhaft an die genannte Steuerung übersandt.

Danach kann beispielsweise mit einem Kochprogramm, wie es auch an sich bekannt ist, diese Induktionsheizspule genau für die Beheizung dieses Kochgefässes angesteuert werden. An dem Kochgefäß können in vorteilhafter Ausgestaltung Sensoren angeordnet sein zur Überwachung eines Kochvorgangs im Kochgefäß, und deren Daten können dann genau zugeordnet werden.

In vorteilhafter Ausgestaltung der Erfindung weist ein Kochgefäß eine Empfangsspule auf, um ein zum Übertragen von Energie genutztes magnetisches Wechselfeld einer Induktionsheizspule als elektrische Energie zu speichern bzw. in elektrische Energie umzuwandeln. Mittels der Sendeantenne der Sendevorrichtung kann dann das Signal ausgesendet werden. Vorteilhaft kann die dazu benötigte Energie die zuvor empfangene bzw. gespeicherte Energie sein.

Im Kochgefäß kann ein Energiespeicher vorgesehen sein, der mit der Empfangsspule verbunden ist, wobei die von der Empfangsspule empfangene Energie in dem Energiespeicher gespeichert wird wie zuvor beschrieben. Dann kann mit bzw. entsprechend der gespeicherten Energie ein Signal oder eine Abfolge mehrerer Signale von der Sendevorrichtung ausgesendet werden. Dieses entspricht vorteilhaft der empfangenen Codierung bzw. enthält diese oder ihre Kennzeichnung.

Die von der Empfangsspule empfangene Energie kann direkt zur elektrischen Ansteuerung der Sendeantenne genutzt werden zum Senden eines Signals oder einer Abfolge mehrerer Signale, was eine Alternative zum vorgenannten Abspeichern der Energie sein kann. Dabei können die Länge und/oder die Stärke des mindestens einen Signals, insbesondere die Abfolge mehrerer Signale, der Varianz von Dauer und/oder Amplitude der Codierung entsprechen. So kann eine Information übertragen werden, beispielsweise die Nummer oder Kennung derjenigen Induktionsheizspule, in deren Heizbereich sich das Kochgefäß befindet und deren Codierung somit empfangen worden ist.

Dabei kann vorgesehen sein, dass die Sendeantenne ein Signal sendet, sobald an die Empfangsspule Energie von einer Induktionsheizspule übertragen wird, deren Heizbereich das Kochgefäß überdeckt bzw. es dort angeordnet ist. Vorteilhaft sendet die Sendevorrichtung solange ein Signal, wie Energie von der Induktionsheizspule als Codierung an die Empfangsspule übertragen bzw. gesendet wird. Sobald keine Energie mehr von der Induktionsheizspule an die Empfangsspule übertragen wird sendet die Sendevorrichtung auch kein Signal mehr.

In weiterer Ausgestaltung kann das Senden bzw. Übertragen von Energie bei Induktionsheizspulen, bei denen nicht bekannt ist, ob ihr Heizbereich von einem Kochgefäß überdeckt ist, zur Erkennung von in ihrem Heizbereich angeordneten Kochgefäßen häufig und/oder regelmäßig wiederholt werden. Dies kann insbesondere mit einer Häufigkeit oder Wiederholfrequenz entsprechend einem zeitlichen Abstand von weniger als 1 min erfolgen, bevorzugt weniger als 5 sec. So wird die Steuerung recht schnell informiert, sobald ein solches Kochgefäß im Heizbereich einer Induktionsheizspule angeordnet worden ist.

Vorteilhaft kann nur in dem Fall ein Senden bzw. Übertragen von Energie der Induktionsheizspulen mit Codierung erfolgen, wenn sich ein Kochgefäß mit Sendevorrichtung zur Erkennung einer Codierung am Induktionskochfeld meldet oder wenn eine Bedienperson dies in eine Steuerung des Induktionskochfelds eingibt.

Vorteilhaft kann vorgesehen sein, dass das Senden bzw. Übertragen von Energie der Induktionsheizspulen mit Codierung zur Erkennung von im Heizbereich angeordneten Kochgefäßen zumindest auch in dem Fall erfolgt, dass eine Änderung einer Überdeckung eines Heizbereichs durch ein Kochgefäß erkannt wird. Dies bedeutet den Fall, dass das Kochgefäß verschoben worden ist, entweder weit weg bzw. aus dem Heizbereich heraus oder nur um wenige cm verschoben worden ist. So kann dies auch erkannt werden.

In weiterer Ausgestaltung des Verfahrens kann vorgesehen sein, dass das Verfahren nur dann auf einem mobilen Endgerät oder einem externen Steuergerät mit Steuerung und Empfangseinrichtung durchgeführt wird, wenn eine App darauf aktiv ist oder wenn das externe Steuergerät aktiviert ist. Das eigentliche vorgenannte Kochprogramm mit dem speziellen Kochgefäß kann dann auf diesem mobilen Endgerät oder externen Steuergerät durchgeführt werden. Wenn diese nicht aktiv sind muss auch das Verfahren nicht durchgeführt werden. Es kann vorgesehen sein, dass das Erkennen des Einschaltens oder Koppeln des mobilen Endgeräts oder des externen Steuergeräts mit dem Induktionskochfeld das Starten des Verfahrens automatisch bewirkt.

Es kann auch vorgesehen sein, das Verfahren nur dann durchzuführen, wenn ein spezielles Kochgefäß mit vorgenannter Empfangsspule und mit Sendevorrichtung auf dem Induktionskochfeld bzw. in einem Heizbereich entdeckt worden ist. Dazu können auch weitere sogenannte Topferkennungssensoren genutzt werden. Vorzugsweise weist das Kochgefäß auch noch einen integrierten Schaltkreis und mindestens einen Sensor auf wie zuvor erläutert. Der integrierte Schaltkreis kann den Sensor auswerten und dazu verwendet werden, die Information mit der Auswertung des Sensors, vorteilhaft also nicht nur das Sensorsignal direkt und alleine, an eine Steuerung des mobilen Endgeräts bzw. externen Steuergeräts oder an eine Steuerung des Induktionskochfelds zu senden.

Eine Codierung besteht bevorzugt aus sehr kurzer Leistungsabgabe, die hier Pulse genannt werden, und die mit einer Betriebsfrequenz oder der Resonanzfrequenz eines Schwingkreises mit der Induktionsheizspule schwingen bzw. erzeugt werden. Die Pulse bilden die mindestens zwei Pulsfolgen. Ein Puls weist eine oder mehrere Schwingungen auf bzw. dauert so lang und ist somit durch die Schwingungen gebildet. Vorzugsweise liegt eine Gesamtdauer eines Pulses zwischen 0,1 µsec und 50 µsec, insbesondere zwischen 10 µsec und 20 oder 25 µsec, ist also deutlich kürzer und energieärmer, als dies bei der Energieübertragung zum tatsächlichen Heizen der Fall ist.

Es kann vorteilhaft vorgesehen sein, dass ein Abstand zwischen zwei Pulsen innerhalb einer Codierung eine Dauer einer Netzhalbwelle des Versorgungsnetzes oder ein Vielfaches davon beträgt, vorzugsweise ein ganzzahliges Vielfaches davon. Die Frequenz des Versorgungsnetzes kann 50Hz oder 60Hz betragen, so dass der Abstand dann 10 msec oder etwas über 8 msec betragen kann.

Die Sendevorrichtung kann ausgewählt werden aus der Gruppe: Bluetooth, BLE, Zigbee, NFC, WiFi. Weitere Sendeeinrichtungen sind natürlich möglich, beispielsweise auch mit proprietären Übertragungsprotokollen. Bluetooth und BLE werden wegen der weiten Verbreitung ihrer Protokolle bevorzugt, wobei BLE wegen des sehr geringen Energieverbrauchs besonders bevorzugt wird.

Wie zuvor angesprochen können die Empfangseinrichtung und die Steuerung außerhalb des Induktionskochfelds angeordnet sein, vorzugsweise in einer externen Bedieneinrichtung. Diese externe Bedieneinrichtung weist dann Bedienelemente und mindestens eine Anzeigeeinrichtung auf. Sie kann ein mobiles Endgerät wie ein Smartphone oder ein Tablet-Computer sein, sie kann aber auch eine ganz spezielle externe Bedieneinrichtung für dieses Induktionskochfeld sein. Damit können möglicherweise neue Funktionalitäten in das Induktionskochfeld integriert werden bzw. ermöglicht werden, die ansonsten nur mit einem aufwendigen Austausch oder Umbau möglich wären, falls überhaupt.

Bevorzugt weist ein Kochgefäß neben der Empfangsspule und der Sendevorrichtung noch einen integrierten Schaltkreis quasi als Intelligenz auf. Eine gewisse Intelligenz kann auch dann in der Sendevorrichtung vorgesehen sein, damit sie die zu sendenden Signale entsprechend aufbereiten kann. Vorzugsweise ist auch noch mindestens ein Sensor wie zum Beispiel ein Temperatursensor oder Drucksensor vorgesehen. Damit kann ein genanntes Kochprogramm auf an sich bekannte Art und Weise geregelt werden bzw. ablaufen, weil ein Zustand im Kochgefäß selbst mit dem Sensor erfasst und berücksichtigt werden kann. Zusätzlich kann noch ein vorgenannter Energiespeicher eine Batterie, Akkumulator oder Kondensator sein. Alternativ kann bis auf einen Kondensator kein Energiespeicher in dem Kochgefäß vorgesehen sein, so dass nur darin Energie Betreiben eines integrierten Schaltkreises und auch der Sendevorrichtung gespeichert sein kann.

Bei einer Ansteuerung aller Induktionsheizspulen zum Übertragen von Energie zur Erkennung von im Heizbereich angeordneten Kochgefäßen kann zuerst für eine kurze Zeit Energie übertragen werden als Puls, wobei dann wird pausiert, und dann kann über eine variierende Anzahl von kurzen Abfolgen von Übertragen von Energie und Pausieren oder durch Abwarten eines bestimmten Vielfachen einer Wartezeit eine Vielzahl von unterschiedlichen Codierungen erzeugt werden. Das Vielfache einer Wartezeit kann insbesondere zwischen 5% und 20% oder 30% der Dauer der gesamten Codierung liegen. Jede der Induktionsheizspulen wird dabei mit einer unterschiedlichen Codierung angesteuert zum Senden bzw. Übertragen von Energie mit dieser Codierung, wobei jede Induktionsheizspule immer wiederkehrend mit derselben Codierung angesteuert wird. Diese Codierung kann bevorzugt fest zu dieser Induktionsheizspule gehören.

Die Steuerung speichert vorteilhaft ab, welches Kochgefäß im Heizbereich welcher Induktionsheizspule angeordnet ist. Dies wird behalten zumindest so lange, bis sich daran etwas ändert oder bis die Steuerung und/oder das Induktionskochfeld ausgeschaltet werden. Neu in einem Heizbereich einer Induktionsheizspule angeordnete Kochgefäße erkennt die Steuerung auf dieselbe Art.

Bevorzugt speichert die Steuerung ab, welches Kochgefäß aus einem Heizbereich heraus bewegt wird, was die Steuerung anhand von Veränderungen der Betriebsparameter des Schwingkreises mit der Induktionsheizspule erkennt, also sozusagen mindestens durch die Induktionsheizspule selbst, unter Umständen auch noch durch vorgenannte Topferkennungssensoren.

In Ausgestaltung der Erfindung unterbleibt ein Senden bzw. Übertragen einer Codierung, solange eine Induktionsheizspule nach Erkennen und Zuordnen eines Kochgefäßes zu ihr bzw. zu ihrem Heizbereich keine Veränderung oder Bewegung dieses Kochgefäßes in diesem ihrem Heizbereich registriert. Dieses Registrieren erfolgt vorteilhaft wie vorgenannt durch Erkennen einer Änderung der Betriebsparameter des Schwingkreises mit der Induktionsheizspule. Bevorzugt erfolgt erst dann wieder ein Senden einer Codierung an dieser oder an allen Induktionsheizspulen, wenn eine Veränderung oder Bewegung des Kochgefäßes in ihrem Heizbereich registriert wird, was vorzugsweise durch eine Induktionsheizspule oder eben durch sonstige Sensoren registriert werden kann.

Bevorzugt ist vorgesehen, dass alle Induktionsheizspulen gleichzeitig beginnen, eine Codierung zu übertragen bzw. Energie zu senden. Dadurch kann dieser Vorgang evtl. besser mit dem sonstigen Betrieb des Induktionskochfelds in Einklang gebracht werden.

Vorteilhaft weist jede Codierung zuerst einen Puls auf bzw. es wird kurz Energie übertragen zur Synchronisation, was als sogenannter Synchronisations-Puls bezeichnet wird. Er dient dazu, den Zeitablauf an allen Kochgefäßen zu synchronisieren und sie ggf. auf bald folgende weitere Pulse bzw. die Codierung vorzubereiten. Ab diesem Synchronisations-Puls kann und sollte jede Induktionsheizspule eine unterschiedliche Codierung aufweisen, damit sie von den unterschieden werden können, damit die Kochgefäße unterschiedliche Signale entsprechend der jeweiligen Codierung senden können.

Vorteilhaft ist vorgesehen, dass innerhalb aller Codierungen nach dem Synchronisations-Puls in zeitlichem Abstand mindestens zwei weitere Pulse folgen, wobei dabei bevorzugt die Anzahl der folgenden Pulse einer Nummer einer einzelnen Induktionsheizspule bzw. Nummerierung der Induktionsheizspulen plus 1 entspricht. Besonders vorteilhaft ist innerhalb einer Codierung der zeitliche Abstand zwischen zwei Pulsen jeweils gleich bis zum letzten Puls vor dem nächsten Synchronisations-Puls.

Als Alternative kann vorgesehen sein, dass durch die Codierung eine binäre Zahl übertragen wird. Eine Binär-Unterscheidung wird durch das Senden eines Pulses oder keines Pulses jeweils an Stellen eines vorgegebenen Zeitrasters vorgenommen, wie dies an sich aus der Signaltechnik bekannt ist. Vorzugsweise wird vor Übertragung der binären Zahl zuerst ein Puls gesendet bzw. kurz Energie übertragen zur Synchronisation bzw. als vorgenannter Synchronisations-Puls. Dies ist hier wiederum wichtig, um die einzelnen Pulse besser erkennen zu können.

Innerhalb aller Codierungen kann bevorzugt ein zeitlicher Abstand zwischen zwei aufeinander folgenden Pulsen ein ganzzahliges Vielfaches einer Abstandsdauer betragen. Die Anzahl der ganzzahligen Vielfachen der Abstandsdauer zwischen zwei aufeinander folgenden Pulsen entspricht einer Nummer oder Nummerierung der Induktionsheizspulen, wobei insbesondere jede Codierung nur genau zwei Pulse oder genau drei Pulse aufweist, jeweils mit dem bestimmten Abstand zueinander.

In vorteilhafter Ausgestaltung der Erfindung kann vorgesehen sein, dass alle Codierungen (n+1) Pulse aufweisen mit (zwei bis n) verschiedenen Abstandsdauern. Damit können n Induktionsheizspulen unterschieden werden. Dabei können dann die Abstandsdauern ausgewertet werden hinsichtlich ihrer Kombination, was die genaue Erkennung der Induktionsheizspule ermöglicht, die diese Codierung gesendet hat.

Vorteilhaft ist grundsätzlich vorgesehen, dass die Sendevorrichtung als Signal eine bereits verarbeitete Information übersendet, insbesondere ist dies direkt die Nummer der Induktionsheizspule als Bezeichnung oder die Position der Induktionsheizspule an dem Induktionskochfeld als mindestens zwei Pulsfolgen. Dies ist aus der von einer Induktionsheizspule empfangenen Codierung ausgewertet worden. Dabei kann insbesondere die Position der Induktionsheizspule am Induktionskochfeld als x-/y-Koordinate übersandt werden, bezogen auf die Anzahl der Induktionsheizspulen in X-Richtung und in Y-Richtung, um eine Induktionsheizspule zu lokalisieren. Eine Auswertung erfolgt vorteilhaft in der Sendevorrichtung bzw. in einem integrierten Schaltkreis des Kochgefässes, der wiederum besonders vorteilhaft in oder zusammen mit der Sendevorrichtung ausgebildet ist. Im vorgenannten Fall einer Sendevorrichtung mit Bluetooth bzw. BLE oder Zigbee muss ohnehin ein integrierter Schaltkreis vorgesehen sein. Alternativ kann die Auswertung der Codierung in der Empfangseinrichtung oder in der Steuerung erfolgen.

Bevorzugt ist vorgesehen, dass das Verfahren nur auf Induktionsheizspulen durchgeführt wird, deren Heizbereich überhaupt von einem Kochgefäß bedeckt ist. Andere Induktionsheizspulen können auf dieses Verfahren verzichten und nur einzelne Pulse senden bzw. übertragen, die ohnehin für die Erkennung des Vorhandenseins von Kochgefäßen notwendig und auch üblich sind, dies auch ohne Kochgefäß mit Empfangsspule. Das Verfahren kann auch nur auf denjenigen Induktionsheizspulen durchgeführt werden, deren Heizbereich nur genau von einem Kochgefäß überdeckt ist.

Bei sogenannten Flächenkochfeldern ist es möglich, dass ein Kochgefäß den Heizbereich mehrerer Induktionsheizspulen überdeckt. Dadurch empfängt dieses Kochgefäß die Puls-Muster bzw. Pulsfolgen aller Induktionsheizspulen, deren Heizbereiche es überdeckt. Das Kochgefäß muss daher möglicherweise aus einer Überlagerung von verschiedenen Puls-Mustern mehrere Puls-Muster einzelner Induktionsheizspulen erkennen und extrahieren, was möglich ist. Nach Erkennen eines solchen Falls können die erkennenden Induktionsheizspulen ihre Codierungen als Sonderfall auch einmal hintereinander senden.

Die Kochfeldsteuerung eines Flächenkochfeldes ist normalerweise in der Lage zu bestimmen, welche Induktionsheizspule von welchem Kochgefäß überdeckt wird. Daher kann bevorzugt bei einem Kochgefäß, das mehreren Induktionsheizspulen bedeckt, das Verfahren jeweils nur an einer Induktionsheizspule durchgeführt werden, bevorzugt nur auf der am stärksten überdeckten Induktionsheizspule.

Weiterhin kann es möglich sein, dass eine Induktionsheizspule von mehreren Kochgefäßen überdeckt wird. Bevorzugt ist vorgesehen, dass das Verfahren dann nur auf denjenigen Induktionsheizspulen durchgeführt wird, deren Heizbereich nur von einem Kochgefäß überdeckt wird. Werden mehrere festgestellt, so kann das Problem auftreten, dass keine Zuordnung einer Codierung zu nur genau einem einzigen Kochgefäß möglich ist, da zwei im Heizbereich angeordnete Kochgefäße dieselbe Codierung empfangen.

Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Darstellung eines erfindungsgemäßen Induktionskochfelds in einer Anordnung mit einem auf einen Heizbereich einer Induktionsheizspule aufgestellten Kochgefäß samt externem Bediengerät,
- Fig. 2: eine vereinfachte Darstellung der Funktionalitäten des Kochgefäßes mit Intelligenz,
- Fig. 3 bis 11: verschiedene Codierungen.

### DETAILLIERTE BESCHREIBUNG DER AUSFÜHRUNGSBEISPIELE

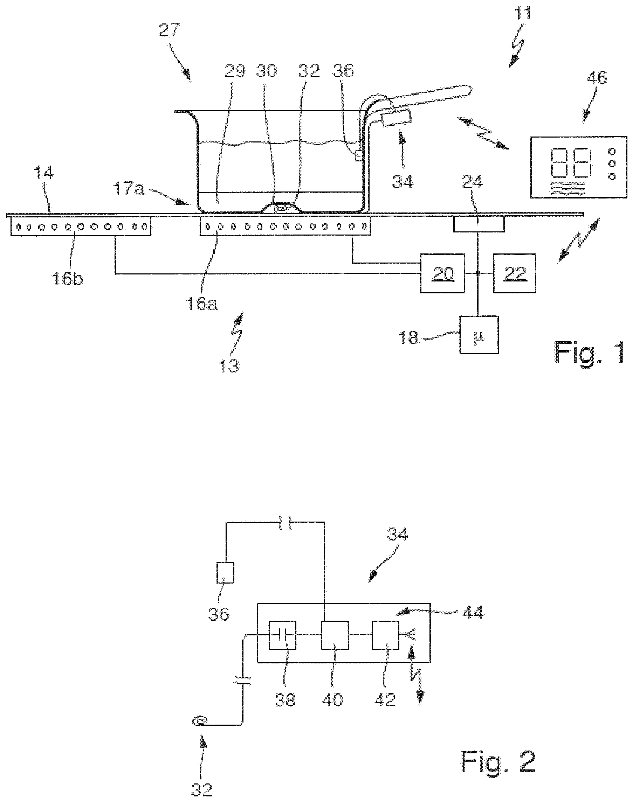

In der Fig. 1 ist eine Anordnung 11 dargestellt mit einem erfindungsgemäßen Induktionskochfeld 13. Das Induktionskochfeld 13 weist eine Kochfeldplatte 14 auf, unter der zwei Induktionsheizspulen 16a und 16b angeordnet sind. In der Praxis sind dies vorteilhaft mehr Induktionsheizspulen 16, beispielsweise vier oder sechs bis zu zwanzig oder dreißig bei vorgenannten Flächenkochfeldern.

Des Weiteren weist das Induktionskochfeld 13 eine Kochfeldsteuerung 18 auf, die mit Funktionseinheiten einer Umrichtervorrichtung 20, einer Sende-/Empfangseinrichtung 22 und einem Bedienmodul 24 an der Unterseite der Kochfeldplatte 14 verbunden ist. Diese Funktionseinheiten sind jeweils wie üblich ausgebildet. Ein Funkstandard für die Sende-/Empfangseinrichtung 22 kann grundsätzlich, wie eingangs erläutert worden ist, vielfältig ausgebildet sein. Vorteilhaft ist es aus den vorgenannten Möglichkeiten Bluetooth bzw. BLE, aber auch ZigBee, WLAN oder ähnliche, sowie proprietäre Lösungen ohne einen allgemeingültigen Standard.

Oberhalb der Induktionsheizspulen 16a und 16b ist jeweils ein Heizbereich gebildet mit einer Fläche, der jeweils in etwa der Fläche der Induktionsheizspulen 16 entspricht. In dem Heizbereich 17a ist ein Kochgefäß 27 angeordnet bzw. dort auf die Oberseite der Kochfeldplatte 14 aufgesetzt. Das Kochgefäß 27 weist in einer Ausnehmung 30 eines Bodens 29 eine Empfangsspule 32 auf. Die Empfangsspule 32 weist wenige Windungen auf und ist derart an der Unterseite des Bodens 29 angeordnet, dass sie freiliegt bzw. vom restlichen Boden nicht gegen das Magnetfeld der Induktionsheizspule 16a abgeschirmt ist. Dies ist wichtig für die zuvor beschriebene Energieübertragung. Die Empfangsspule 32 ist mit einem Kochgefäßmodul 34 verbunden, das in der Fig. 2 in Vergrößerung dargestellt ist.

Rechts ist in Fig. 1 eine externe Bedieneinrichtung 46 dargestellt, die einerseits eine spezielle Bedieneinrichtung für das Induktionskochfeld 13 sein kann, alternativ ein mobiles Endgerät wie ein Tablet-Computer oder ein Smartphone. Die externe Bedieneinrichtung 46 weist eine großflächige Anzeige auf, wie dargestellt ist. Des Weiteren weist sie, wie insbesondere für die genannten mobilen Endgeräte bekannt ist, eine Empfangseinrichtung, eine Sendeeinrichtung und auch einen Prozessor bzw. integrierten Schaltkreis auf. Ein Funkstandard passt hier zu der Sende-/Empfangseinrichtung 22, vorteilhaft also Bluetooth oder BLE. Zu der externen Bedieneinrichtung 46 braucht nicht viel gesagt zu werden, auf ihr kann beispielsweise mittels einer App oder eines speziellen Programms ein eingangs erläutertes Kochprogramm ablaufen. Die dargestellte externe Bedieneinheit ist nicht zwangsläufig erforderlich. Ihre Funktion kann ebenso in einer Bedien- und Steuereinheit integriert sein, die sich innerhalb des Kochfeldes befindet.

In der Fig. 2 ist das Kochgefäßmodul 34 in Vergrößerung dargestellt. Mittels einer elektrischen Verbindung als Kabel odgl. ist das Kochgefäßmodul 34 mit der Empfangsspule 32 verbunden. Auf ähnliche Art und Weise ist das Kochgefäß 34 mit einem Temperatursensor 36 elektrisch leitend verbunden, der außerhalb davon angeordnet ist und vorteilhaft gemäß Fig. 1 im Inneren des Kochgefäßes 27 angeordnet ist, so dass er von darin befindlichem Wasser oder Kochgut umgeben ist und dessen Temperatur bestimmen kann. Dieser Temperatursensor kann ebenso im Boden des Kochgefässes eingelassen sein, wenn nicht die Kochguttemperatur, sondern die Bodentemperatur erfasst werden soll. Anstelle des Temperatursensors 36 sind alternativ oder zusätzlich noch weitere Sensoren wie Drucksensoren, Gewichtssensoren odgl. vorstellbar.

Des Weiteren weist das Kochgefäßmodul 34 einen Energiespeicher 38 auf, der direkt mit der Empfangsspule 32 verbunden ist. Dies kann ein Akkumulator sein, vorteilhaft ist es ein vorgenannter Kondensator, da er keine besonders großen Energiemengen speichern muss, vor allem wenn mit Bluetooth bzw. BLE oder Zigbee gesendet wird, dies aber möglichst schnell und verlustfrei tun sollte.

Im Kochgefäßmodul 34 ist ein integrierter Schaltkreis 40 als eine Art Steuerung vorgesehen, der eben die von der Empfangsspule 32 empfangene Energie bzw. die Signale oder Pulse erfasst, vorteilhaft bzgl. Dauer und/oder Abstand und/oder Amplitude bzw. auch aufaddierter und im Energiespeicher 38 abgespeicherte Energie. Der integrierte Schaltkreis 40 steuert eine Sendevorrichtung 42 mit Sendeantenne 44 an, vorteilhaft aufgebaut mit dem vorgenannten Bluetooth- bzw. BLE-Standard oder Zigbee.

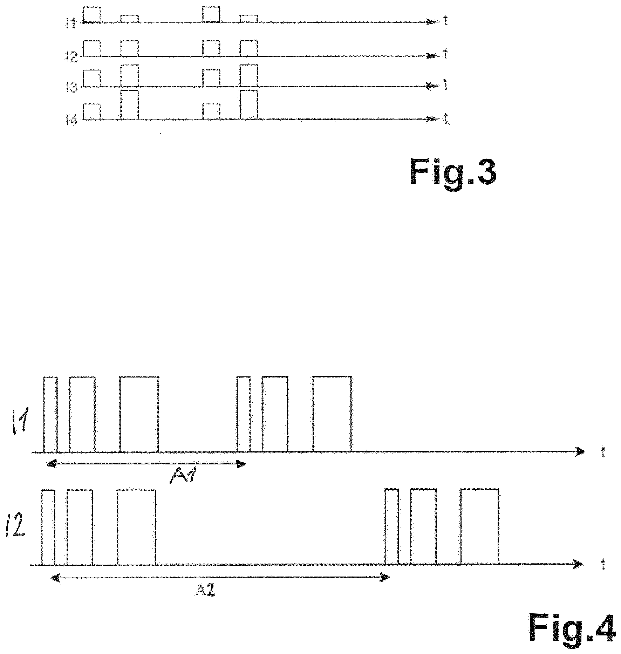

In der Fig. 3 ist eine Möglichkeit dargestellt, wie bei vier Induktionsheizspulen I1 bis I4 eine Unterscheidung jeweils nach einem gleichzeitig für alle Induktionsheizspulen gesendeten Synchronisations-Puls mit einer Amplitude eines nachfolgend gesendeten Pulses erzeugt werden kann. Die Amplitude steigt dabei schrittweise an mit der höheren Nummer der Induktionsheizspule. Die Pulse mit unterschiedlicher Amplitude werden hier gleichzeitig gesendet, sie können aber natürlich auch zeitversetzt gesendet werden. Somit weist jede Pulsfolge auch hier mindestens zwei Pulse auf.

In der Fig. 4 ist exemplarisch für zwei Induktionsheizspulen eine jeweilige Codierung über der Zeit t dargestellt, oben für die erste Induktionsheizspule I1 und unten für die Induktionsheizspule I2. Die Pulsfolgen in sich sind zwar gleich, es sind jeweils drei Pulse vorgesehen mit einer jeweiligen Pulsdauer, wobei die Pulsdauer der zweite Puls doppelt so lang ist wie der erste Puls und der dritte Puls dreimal so lang ist wie der erste Puls. Auch eine Pause als zeitlicher Abstand zwischen den einzelnen Pulsen jeder Pulsfolge ändert sich, so ist die zweite Pause zwischen dem zweiten Puls und dem dritten Puls doppelt so lang wie die erste Pause zwischen dem ersten Puls und dem zweiten Puls. So sind die Pulsfolgen sehr charakteristisch und eindeutig zu erkennen. Diese Pulsfolgen werden für die hier dargestellten zwei Induktionsheizspulen verwendet, werden vorteilhaft aber für alle Induktionsheizspulen des Induktionskochfelds verwendet. Diese beiden Pulsfolgen werden somit variiert zur Ermittlung, über welcher Induktionsheizspule ein Kochgefäß aufgestellt ist.

Hier erfolgt eine Zeitmessung zwischen zwei Pulsfolgen einschließlich Anfahren der Pulsfolge, um eine im Induktionskochfeld erzeugte Geräuschentwicklung zu reduzieren. Ein Anfahren ist hierbei als das Inkrementieren eines Tastgrads in der Leistungserzeugung für die Induktionsheizspule und/oder als Senken der Frequenz innerhalb kurzer Zeit zu verstehen. So werden die Energieübertragung und das Frequenzspektrum des Pulses bzw. der Pulse kontrolliert. Dargestellt in der Fig. 4 ist der Tastgrad, aber auch die Frequenz ändert sich. Der zeitliche Abstand bei der Induktionsheizspule I1 zwischen den zwei identischen Pulsfolgen beträgt A1, bei der Induktionsheizspule I2 beträgt er A2 und ist deutlich länger. Für eine nochmals weitere Induktionsheizspule wäre der zeitliche Abstand Ax dann nochmals länger als A2.

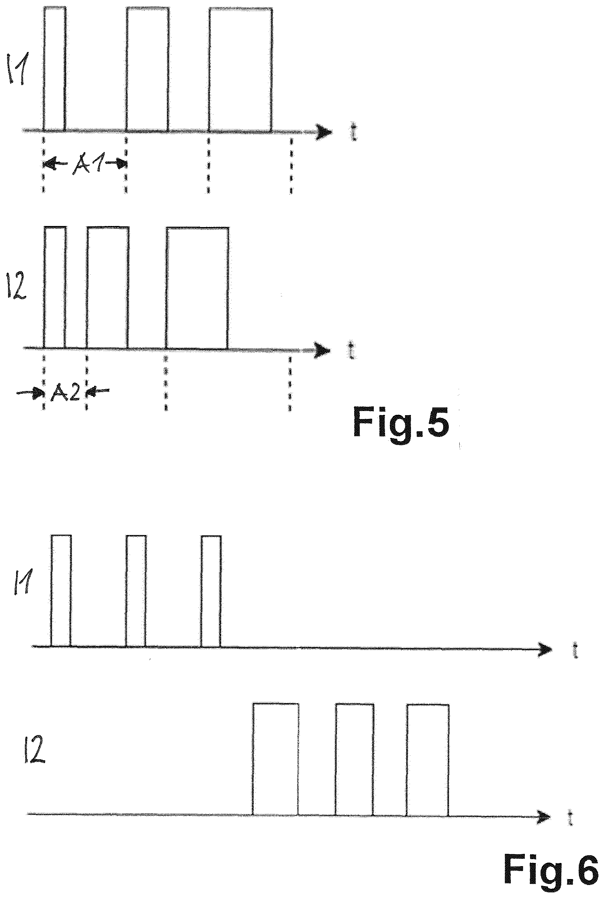

In der Fig. 5 sind wiederum zwei Pulsfolgen für eine Induktionsheizspule I1 und eine Induktionsheizspule I2 dargestellt. Diese im Detail dargestellten Pulsfolgen können entsprechend Fig. 4 jeweils mindestens zweimal verwendet werden. Dies ist aber nicht zwingend. Die zweite Pulsfolge für die Induktionsheizspule I2 entspricht genau derjenigen aus Fig. 4. Bei der ersten Pulsfolge oben für die Induktionsheizspule I1 ist der zeitliche Abstand A1 zwischen dem ersten Puls und dem zweiten Puls genau doppelt so lang wie der zeitliche Abstand A2 bei der unteren Pulsfolge. Als nochmalige weitere Variation könnte auch der zeitliche Abstand zwischen dem zweiten Puls und dem dritten Puls zusätzlich oder alternativ variiert werden.

So können die unterschiedlichen Verfahren zum vorgenannten Anfahren dargestellt werden, wobei nur ein Parameter abgeändert wird. Bei der oberen Pulsfolge wird der Tastgrad nach jeder Pulsfolge bzw. Periode inkrementiert, wobei die Frequenz konstant bleibt. Bei der unteren Pulsfolge wird ein fester Tastgrad verwendet, beispielsweise 50%, wobei die Frequenz nach jeder Pulsfolge bzw. Periode angepasst wird. In diesem Beispiel wird die Frequenz reduziert nach einer hohen Startfrequenz, wobei die Frequenz dann der Resonanzfrequenz angenähert wird.

Bei der Fig. 6 wird als einfachere Variation für die Induktionsheizspule I1 oben eine Pulsfolge von drei kurzen Pulsen verwendet, und für die Induktionsheizspule I2 unten eine Pulsfolge von drei mehr als doppelt so langen Pulsen, wobei die zeitlichen Abstände zwischen den einzelnen längeren Pulsen kürzer sind. Insgesamt dauert die untere Pulsfolge aber etwas länger als die obere Pulsfolge. Es wird oben für die Induktionsheizspule I1 also eine andere Pulsfolge verwendet als für die Induktionsheizspule I2, beispielsweise mit der Bedeutung eines Tastgrades von 25% bei der oberen Pulsfolge und 50% bei der unteren Pulsfolge, jeweils bei gleicher Frequenz.

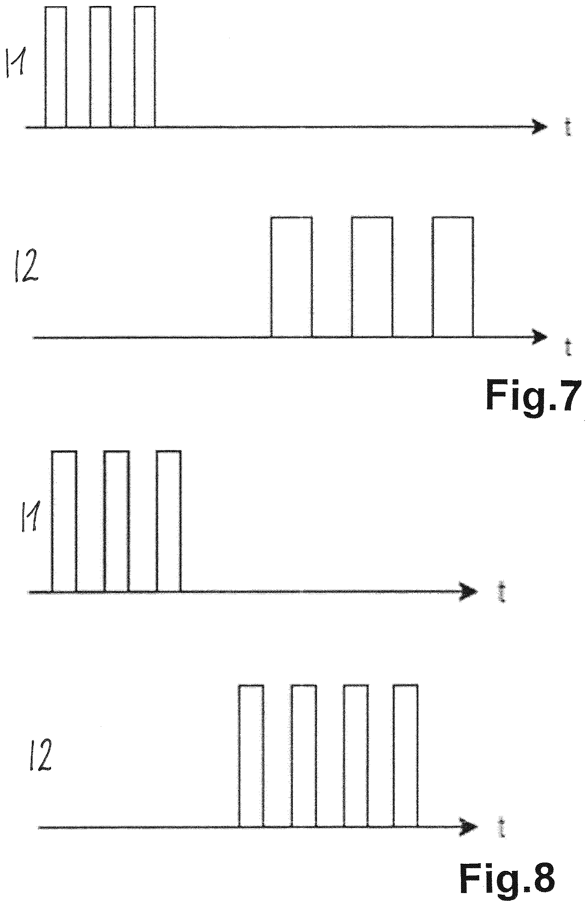

Bei der Fig. 7 erfolgt eine Variation der Pulsdauer und des zeitlichen Abstandes zwischen den Pulsen bei jeder Pulsfolge. So kann oben für die Induktionsheizspule I1 eine Frequenz von 70 kHz und unten für die Induktionsheizspule I2 eine Frequenz von 60 kHz verwendet werden, wobei insgesamt oben und unten derselbe Tastgrad verwendet wird. Die beiden Pulsfolgen oben und unten können zeitlich zueinander versetzt sein, wie es hier dargestellt ist. Dies muss aber nicht so sein, sie können auch gleichzeitig gestartet werden.

Bei der Fig. 8 erfolgt eine Variation der Pulsanzahl beiden Pulsfolgen. Für die obere Induktionsheizspule I1 werden drei kurze Pulse mit kurzem zeitlichen Abstand zueinander verwendet. Für die untere Induktionsheizspule I2 werden vier kurze Pulse mit kurzem zeitlichen Abstand zueinander verwendet, wobei die Pulsdauer sowie der zeitliche Abstand zueinander der oberen Pulsfolge entspricht. Der Tastgrad und die Frequenz können dabei vorteilhaft gleich bleiben.

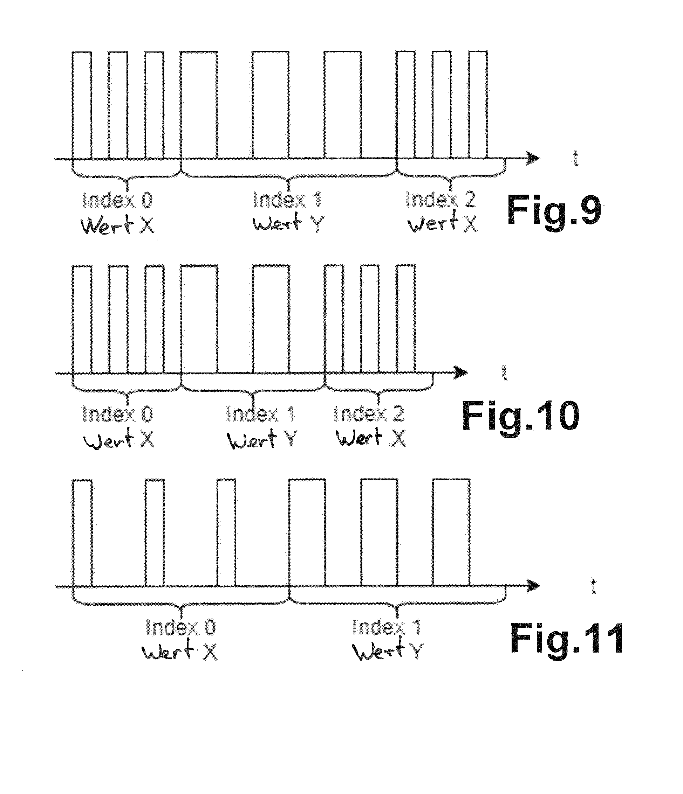

Bei den Ausführungsbeispielen der Fig. 9 bis 11 erfolgt eine Variation der Parameter innerhalb einer Pulsfolge, zur Codierung einer Position der Induktionsheizspule in einem oben genannten Koordinatensystem der Induktionsheizspule innerhalb des Induktionskochfelds. Die Information kann entweder mittels der Frequenz bei gleichem Tastgrad codiert werden, siehe Fig. 9 und 10, oder mittels des Tastgrad bei gleicher Frequenz, siehe Fig. 11.

Der Wert X bzw. Y als Index zur Bestimmung einer Anordnung in dem Koordinatensystem kann dementsprechend aus dem Signal abgeleitet werden. Anzumerken ist hierbei, dass immer ganze Pulse ausgegeben werden, wobei jedoch die Anzahl je nach Frequenz adaptiert werden kann. So weist in Fig. 9 der Index 1 entsprechend dem Wert Y 3 Pulse auf, und in Fig. 10 weist er nur 2 Pulse auf. In Abhängigkeit des Tastgrades kann der Wert X bzw. Y mehrere Bit repräsentieren, abhängig von Anzahl der verwendeten Frequenzen. Die Anzahl der übertragenen Indexe, was mehrere Bit sein können, kann in Abhängigkeit der zu übertragenden Daten und des Tastgrades verändert werden. So sind es in Fig. 9 und 10 je 3 Indices, in Fig. 11 sind es nur 2 Indices. Anzumerken hier ist, dass für den zweiten Wert, hier im Beispiel der Wert Y, ebenfalls ein Tastgrad von 0% gewählt werden kann, wodurch eine Amplitudenumtastung erreicht wird, also eine digitale Modulationsart. Hierbei wird die Amplitude der Träger verändert, um verschiedene Werte zu übertragen.

## Patentansprüche

1. Verfahren zum Betrieb eines Induktionskochfelds (13) mit mehreren Induktionsheizspulen (16), wobei:
- jede Induktionsheizspule (16) einen Heizbereich (17) aufweist,
- ein Kochgefäß (27) mindestens einen Heizbereich (17) überdeckend angeordnet werden kann,
- jede Induktionsheizspule (16) zum Senden bzw. Übertragen von Energie ausgebildet ist zum Beheizen eines Kochgefäßes (27) und dazu von einem Umrichter angesteuert wird,
- jedes Kochgefäß (27) eine Sendevorrichtung (42) mit Sendeantenne (44) zum Senden eines Signals aufweist in Abhängigkeit von empfangener Energie von einer Induktionsheizspule (16), deren Heizbereich (17) das Kochgefäß (27) zumindest teilweise überdeckt,
- eine Empfangseinrichtung (22) vorgesehen ist zum Empfangen von Signalen einer Sendevorrichtung (42) eines Kochgefäßes (27) bzw. aller Sendevorrichtungen (42) von Kochgefäßen (27) auf dem Induktionskochfeld (13),
- eine Steuerung (18) vorgesehen ist, die die Signale von der Empfangseinrichtung (22) erhält und die Informationen zu einem Senden bzw. Übertragen von Energie der Induktionsheizspulen (16) aufweist oder erhält,
wobei das Verfahren die folgenden Schritte aufweist:
- mindestens ein Kochgefäß (27) wird über einem Heizbereich (17) einer Induktionsheizspule (16) angeordnet,
- eine Vielzahl der Induktionsheizspulen (16) werden angesteuert zum Senden bzw. Übertragen von Energie in einem Muster, wobei dabei Dauer und/oder Amplitude variiert werden als Codierung, wobei die Codierung darin besteht, dass
∘ die Amplitude der gesendeten bzw. übertragenen Energie innerhalb der Codierung über der Zeit variiert, insbesondere zwischen Null und einem Codier-Maximalwert variiert, und/oder
∘ die Dauer der Energieübertragung variiert, und/oder
∘ die Dauer zwischen zwei Energieübertragungen variiert, und/oder
∘ die Anzahl der Energieübertragungen variiert,
- wobei eine Codierung mindestens eine Folge von mindestens zwei Pulsen aufweist und eine Pulsfolge bildet,
- überdeckt ein Kochgefäß (27) einen Heizbereich (17) einer Induktionsheizspule (16), die Energie mit einer bestimmten Codierung übertragen hat, so sendet die Sendevorrichtung (42) an die Empfangseinrichtung (22) ein Signal oder eine Abfolge mehrerer Signale, die eindeutig von dieser Codierung abhängen und/oder die zu genau dieser Codierung zuordenbar sind,
- die Steuerung erhält die von der Empfangseinrichtung (22) empfangenen Signale und vergleicht diese mit Informationen über die von den Induktionsheizspulen (16) gesendeten bzw. übertragenen Energie als Codierungen, um zu ermitteln, welche Codierung von übertragener Energie von einer bestimmten Induktionsheizspule (16) zu einem empfangenen Signal oder einer Abfolge mehrerer Signale passt, um darauf aufbauend eine Zuordnung des dieses Signal oder diese Abfolge mehrerer Signale sendenden Kochgefäßes (27) zu dem Heizbereich (17) bzw. zu der zu dem Heizbereich (17) zugehörigen Induktionsheizspule (16) vorzunehmen,
**dadurch gekennzeichnet, dass** ein Senden bzw. Übertragen von Energie als Codierung mit einer Frequenz von mindestens 50 kHz erfolgt.

2. Verfahren nach Anspruch 1, **dadurch gekennzeichnet, dass** ein Kochgefäß (27) eine Empfangsspule (32) aufweist, um ein zum Übertragen von Energie genutztes magnetisches Wechselfeld einer Induktionsheizspule (16) als elektrische Energie zu speichern, um mittels der Sendeantenne (44) der Sendevorrichtung (42) das Signal auszusenden.

3. Verfahren nach Anspruch 1 oder 2, **dadurch gekennzeichnet, dass** im Kochgefäß (27) ein Energiespeicher (38) vorgesehen ist, der mit der Empfangsspule (32) verbunden ist, wobei die von der Empfangsspule (32) empfangene Energie in dem Energiespeicher (38) gespeichert wird und wobei entsprechend der gespeicherten Energie ein Signal oder eine Abfolge mehrerer Signale von der Sendevorrichtung (42) ausgesendet wird.

4. Verfahren nach einem der vorhergehenden Ansprüche, **dadurch gekennzeichnet, dass** das Senden bzw. Übertragen von Energie bei Induktionsheizspulen (16), bei denen nicht bekannt ist, dass oder ob ihr Heizbereich (17) von einem Kochgefäß (27) überdeckt ist, zur Erkennung von im Heizbereich (17) angeordneten Kochgefäßen (27) häufig und/oder regelmäßig wiederholt wird, insbesondere mit einer Häufigkeit bzw. einem zeitlichen Abstand von weniger als 1 min, insbesondere weniger als 5 sec.

5. Verfahren nach einem der vorhergehenden Ansprüche, **dadurch gekennzeichnet, dass** das Senden bzw. Übertragen von Energie der Induktionsheizspulen (16) zur Erkennung von im Heizbereich (17) angeordneten Kochgefäßen (27) zumindest auch in dem Fall erfolgt, dass eine Änderung einer Überdeckung eines Heizbereichs (17) durch ein Kochgefäß (27) erkannt wird.

6. Verfahren nach einem der vorhergehenden Ansprüche, **dadurch gekennzeichnet, dass** das Verfahren nur dann durchgeführt wird, wenn ein Kochgefäß (27) mit Empfangsspule (32) nach Anspruch 2 und mit Sendevorrichtung (42) auf dem Induktionskochfeld (13) entdeckt worden ist, wobei vorzugsweise das Kochgefäß (27) auch noch einen integrierten Schaltkreis (40) und mindestens einen Sensor (36) aufweist.

7. Verfahren nach einem der vorhergehenden Ansprüche, **dadurch gekennzeichnet, dass** eine Codierung aus Pulsen besteht, von denen mindestens zwei Pulse die mindestens eine Pulsfolge bilden, wobei die Pulse mit einer Betriebsfrequenz oder der Resonanzfrequenz eines Schwingkreises mit der Induktionsheizspule (16) erzeugt werden, wobei ein Puls eine oder mehrere Schwingungen aufweist, vorzugsweise mit einer Gesamtdauer zwischen 0,1 µsec und 50 µsec, insbesondere zwischen 10 µsec und 25 µsec.

8. Verfahren nach einem der vorhergehenden Ansprüche, **dadurch gekennzeichnet, dass** bei einer Ansteuerung aller Induktionsheizspulen (16) zum Übertragen von Energie zur Erkennung von im Heizbereich (17) angeordneten Kochgefäßen (27) zuerst für eine kurze Zeit Energie übertragen wird als Puls, dann pausiert wird, und dann über eine variierende Anzahl von kurzen Abfolgen von Übertragen von Energie und Pausieren oder durch Abwarten eines bestimmten Vielfachen einer Wartezeit, die insbesondere zwischen 5% und 20% der Dauer der Codierungen liegt, eine Vielzahl von unterschiedlichen Codierungen erzeugt wird und jede der Induktionsheizspulen (16) mit einer unterschiedlichen Codierung, jede Induktionsheizspule (16) aber immer wiederkehrend mit derselben Codierung, angesteuert wird zum Senden bzw. Übertragen von Energie mit dieser Codierung.

9. Verfahren nach einem der vorhergehenden Ansprüche, **dadurch gekennzeichnet, dass** die Steuerung (17) abspeichert, welches Kochgefäß (27) im Heizbereich (17) welcher Induktionsheizspule (16) angeordnet ist, wobei die Steuerung neu in einem Heizbereich (17) einer Induktionsheizspule (16) angeordnete Kochgefäße (27) auf dieselbe Art erkennt.

10. Verfahren nach einem der vorhergehenden Ansprüche, **dadurch gekennzeichnet, dass** ein Senden bzw. Übertragen einer Codierung unterbleibt, solange eine Induktionsheizspule (16) nach Erkennen und Zuordnen eines Kochgefäßes (27) keine Veränderung oder Bewegung dieses Kochgefäßes (27) in ihrem Heizbereich (17) registriert durch Änderung der Betriebsparameter des Schwingkreises mit der Induktionsheizspule (16), wobei erst dann wieder ein Senden einer Codierung an dieser oder an allen Induktionsheizspulen (16) erfolgt, wenn eine Veränderung oder Bewegung des Kochgefäßes (27) in ihrem Heizbereich (17) registriert wird, vorzugsweise durch eine Induktionsheizspule (16) oder durch sonstige Sensoren registriert wird.

11. Verfahren nach einem der vorhergehenden Ansprüche, **dadurch gekennzeichnet, dass** alle Induktionsheizspulen (16) gleichzeitig beginnen, eine Codierung zu übertragen als Senden von Energie.

12. Verfahren nach einem der vorhergehenden Ansprüche, **dadurch gekennzeichnet, dass** jede Codierung zuerst einen Puls aufweist bzw. kurz Energie übertragen wird zur Synchronisation, und ab diesem Synchronisations-Puls jede Induktionsheizspule (16) eine unterschiedliche Codierung aufweist.

13. Verfahren nach Anspruch 12, **dadurch gekennzeichnet, dass** innerhalb aller Codierungen nach dem Synchronisations-Puls in zeitlichem Abstand mindestens zwei weitere Pulse folgen und die Anzahl der folgenden Pulse einer Nummerierung der Induktionsheizspulen (16) entspricht, wobei vorzugsweise innerhalb einer Codierung der zeitliche Abstand jeweils gleich ist bis zum letzten Puls vor dem nächsten Synchronisations-Puls.

14. Verfahren nach einem der vorhergehenden Ansprüche, **dadurch gekennzeichnet, dass** die Sendevorrichtung (42) eine verarbeitete Information übersendet, insbesondere direkt eine Nummer der Induktionsheizspule (16) als Bezeichnung oder die Position der Induktionsheizspule (16) an dem Induktionskochfeld (13) als mindestens zwei Pulsfolgen, die aus der von einer Induktionsheizspule (16) empfangenen Codierung ausgewertet worden ist, wobei vorzugsweise die Auswertung in der Sendevorrichtung (42) erfolgt, wobei insbesondere die Position der Induktionsheizspule (16) am Induktionskochfeld (13) als x-/y-Koordinate übersendet wird.

15. Induktionskochfeld (13) ausgebildet zur Durchführung des Verfahrens nach einem der vorhergehenden Ansprüche, wobei das Induktionskochfeld (13) mehrere Induktionsheizspulen (16) aufweist, wobei jeder Induktionsheizspule (16) mindestens ein Heizbereich (17) zugeordnet ist.

## Claims

1. Method for operating an induction cooktop (13) with multiple induction heating coils (16), wherein:
- each induction heating coil (16) has a heating area (17),
- a cooking vessel (27) can be arranged to cover at least one heating area (17),
- each induction heating coil (16) is designed to transmit energy for heating a cooking vessel (27) and is controlled by a converter for this purpose,
- each cooking vessel (27) has a transmitting device (42) with a transmitting antenna (44) for transmitting a signal depending on the energy received from an induction heating coil (16) whose heating area (17) at least partially covers the cooking vessel (27),
- a receiving device (22) is provided for receiving signals from a transmitting device (42) of a cooking vessel (27) or from all transmitting devices (42) of cooking vessels (27) on the induction cooktop (13),
- a control unit (18) is provided which receives the signals from the receiving device (22) and has or receives information for transmitting or transferring energy from the induction heating coils (16),
wherein the method comprises the following steps:
- at least one cooking vessel (27) is arranged above a heating area (17) of an induction heating coil (16),
- a plurality of the induction heating coils (16) are controlled to transmit energy in a pattern, whereby the duration and/or amplitude are varied as coding, wherein the coding consists in that
o the amplitude of the transmitted energy varies over time within the coding, in particular varying between zero and a maximum coding value, and/or
o the duration of the energy transmission varies, and/or
o the duration between two energy transmissions varies, and/or
o the number of energy transmissions varies,
- wherein a coding comprises at least one sequence of at least two pulses and forms a pulse sequence,
- a cooking vessel (27) covers a heating area (17) of an induction heating coil (16), which has transmitted energy with a specific code, the transmitting device (42) sends a signal or a sequence of several signals to the receiving device (22), which signals clearly depend on this code and/or can be assigned to this exact code,
- the control unit receives the signals received by the receiving device (22) and compares them with information about the energy sent or transmitted by the induction heating coils (16) as codes in order to determine which code of transmitted energy from a specific induction heating coil (16) matches a received signal or a sequence of several signals, in order to assign the cooking vessel (27) transmitting this signal or this sequence of several signals to the heating area (17) or to the induction heating coil (16) associated with the heating area (17),
**characterized in that** the transmission or transfer of energy takes place as coding with a frequency of at least 50 kHz.

2. Method according to claim 1, **characterized in that** a cooking vessel (27) has a receiving coil (32) in order to store an alternating magnetic field of an induction heating coil (16) used to transmit energy as electrical energy in order to transmit the signal by means of the transmitting antenna (44) of the transmitting device (42).

3. Method according to claim 1 or 2, **characterized in that** an energy storage device (38) is provided in the cooking vessel (27), which is connected to the receiving coil (32), wherein the energy received by the receiving coil (32) is stored in the energy storage device (38) and wherein a signal or a sequence of several signals is transmitted by the transmitting device (42) in accordance with the stored energy.

4. Method according to one of the preceding claims, **characterized in that** the transmission or transfer of energy in the case of induction heating coils (16) where it is not known whether or not their heating area (17) is covered by a cooking vessel (27), is repeated frequently and/or regularly, in particular with a frequency or time interval of less than 1 minute, in particular less than 5 seconds, in order to detect cooking vessels (27) located in the heating area (17).

5. Method according to one of the preceding claims, **characterized in that** the transmission or transfer of energy from the induction heating coils (16) for detecting cooking vessels (27) arranged in the heating area (17) also takes place at least in the case where a change in the covering of a heating area (17) by a cooking vessel (27) is detected.

6. Method according to one of the preceding claims, **characterized in that** the method is only carried out if a cooking vessel (27) with a receiving coil (32) according to claim 2 and with a transmitting device (42) has been detected on the induction cooktop (13), wherein the cooking vessel (27) preferably also has an integrated circuit (40) and at least one sensor (36).

7. Method according to one of the preceding claims, **characterized in that** a code consists of pulses, at least two of which form the at least one pulse sequence, wherein the pulses are generated at an operating frequency or the resonance frequency of an oscillating circuit with the induction heating coil (16), wherein a pulse has one or more oscillations, preferably with a total duration between 0.1 µsec and 50 µsec, in particular between 10 µsec and 25 µsec.

8. Method according to one of the preceding claims, **characterized in that**, when all induction heating coils (16) are activated to transfer energy for detecting cooking vessels (27) arranged in the heating area (17), energy is first transferred as a pulse for a short time, then paused, and then, over a varying number of short sequences of energy transfer and pausing, or by waiting for a certain multiple of a waiting time, which is in particular between 5% and 20% of the duration of the coding, a plurality of different codes is generated and each of the induction heating coils (16) is controlled with a different code, but each induction heating coil (16) is repeatedly controlled with the same code, in order to send or transfer energy with this code.

9. Method according to one of the preceding claims, **characterized in that** the control unit (18) stores which cooking vessel (27) is arranged in the heating area (17) of which induction heating coil (16), whereby the control recognizes cooking vessels (27) arranged in a heating area (17) of an induction heating coil (16) in the same way.

10. Method according to one of the preceding claims, **characterized in that** no coding is transmitted or transferred as long as an induction heating coil (16) does not register any change or movement of this cooking vessel (27) in its heating area (17) after recognizing and assigning a cooking vessel (27) by changing the operating parameters of the oscillating circuit with the induction heating coil (16), whereby a code is only transmitted again to this or all induction heating coils (16) when a change or movement of the cooking vessel (27) is detected in its heating area (17), preferably by an induction heating coil (16) or by other sensors.

11. Method according to one of the preceding claims, **characterized in that** all induction heating coils (16) simultaneously begin to transmit a code as a transmission of energy.

12. Method according to one of the preceding claims, **characterized in that** each code first has a pulse or a short transmission of energy for synchronization, and from this synchronization pulse each induction heating coil (16) has a different code.

13. Method according to claim 12, **characterized in that** within all codes after the synchronization pulse, at least two further pulses follow at a time interval and the number of subsequent pulses corresponds to a numbering of the induction heating coils (16), whereby preferably within a code the time interval is the same in each case until the last pulse before the next synchronization pulse.

14. Method according to one of the preceding claims, **characterized in that** the transmitting device (42) transmits processed information, in particular directly a number of the induction heating coil (16) as a designation or the position of the induction heating coil (16) on the induction cooktop (13) as at least two pulse sequences, which are evaluated from the coding received by an induction heating coil (16), the evaluation preferably taking place in the transmitting device (42), in particular the position of the induction heating coil (16) on the induction cooktop (13) being transmitted as x/y coordinates.

15. Induction cooktop (13) designed to carry out the method according to one of the preceding claims, wherein the induction cooktop (13) has several induction heating coils (16), wherein at least one heating area (17) is assigned to each induction heating coil (16).

## Revendications

1. Procédé pour faire fonctionner une plaque de cuisson à induction (13) comportant plusieurs bobines de chauffage par induction (16), dans lequel :
- chaque bobine de chauffage par induction (16) comporte une zone de chauffage (17),
- un récipient de cuisson (27) peut être disposé de manière à recouvrir au moins une zone de chauffage (17),
- chaque bobine de chauffage par induction (16) est conçue pour émettre ou transmettre de l'énergie afin de chauffer un récipient de cuisson (27) et est commandée à cet effet par un convertisseur,
- chaque récipient de cuisson (27) comporte un dispositif d'émission (42) avec une antenne d'émission (44) pour émettre un signal en fonction de l'énergie reçue d'une bobine de chauffage par induction (16) dont la zone de chauffage (17) recouvre au moins partiellement le récipient de cuisson (27),
- un dispositif de réception (22) est prévu pour recevoir les signaux d'un dispositif d'émission (42) d'un récipient de cuisson (27) ou de tous les dispositifs d'émission (42) des récipients de cuisson (27) sur la plaque de cuisson à induction (13),
- une commande (18) est prévue, qui reçoit les signaux du dispositif de réception (22) et qui comporte ou reçoit les informations relatives à l'émission ou à la transmission d'énergie des bobines de chauffage à induction (16),
le procédé comportant les étapes suivantes :
- au moins un récipient de cuisson (27) est disposé au-dessus d'une zone de chauffage (17) d'une bobine de chauffage à induction (16),
- une pluralité de bobines de chauffage par induction (16) sont commandées pour émettre ou transmettre de l'énergie selon un motif, la durée et/ou l'amplitude étant variées à titre de codage, le codage consistant en ce que
o l'amplitude de l'énergie émise ou transmise varie dans le temps au sein du codage, en particulier entre zéro et une valeur maximale de codage, et/ou
o la durée de la transmission d'énergie varie, et/ou
o la durée entre deux transmissions d'énergie varie, et/ou
o le nombre de transmissions d'énergie varie,
- un codage comportant au moins une séquence d'au moins deux impulsions et formant une séquence d'impulsions,
- un récipient de cuisson (27) recouvrant une zone de chauffage (17) d'une bobine de chauffage par induction (16), qui a transmis l'énergie avec un codage déterminé, le dispositif d'émission (42) envoie au dispositif de réception (22) un signal ou une séquence de plusieurs signaux qui dépendent clairement de ce codage et/ou qui peuvent être attribués précisément à ce codage,
- la commande reçoit les signaux reçus par le dispositif de réception (22) et les compare à des informations sur l'énergie envoyée ou transmise par les bobines de chauffage par induction (16) sous forme de codages afin de déterminer quel codage d'énergie transmise par une bobine de chauffage par induction donnée (16) correspond à un signal reçu ou à une séquence de plusieurs signaux, afin de procéder sur cette base à une attribution du récipient de cuisson (27) émettant ce signal ou cette séquence de plusieurs signaux à la zone de chauffage (17) ou à la bobine de chauffage par induction (16) associée à la zone de chauffage (17),
**caractérisé en ce que** l'émission ou la transmission d'énergie s'effectue sous forme de codage à une fréquence d'au moins 50 kHz.

2. Procédé selon la revendication 1, **caractérisé en ce qu'**un récipient de cuisson (27) comporte une bobine de réception (32) afin de stocker sous forme d'énergie électrique un champ magnétique alternatif d'une bobine de chauffage par induction (16) utilisé pour transmettre de l'énergie afin d'émettre le signal au moyen de l'antenne d'émission (44) du dispositif d'émission (42).

3. Procédé selon la revendication 1 ou 2, **caractérisé en ce qu'**un accumulateur d'énergie (38) est prévu dans le récipient de cuisson (27), lequel est relié à la bobine de réception (32), l'énergie reçue par la bobine de réception (32) étant stockée dans l'accumulateur d'énergie (38) et un signal ou une séquence de plusieurs signaux étant émis par le dispositif d'émission (42) en fonction de l'énergie stockée.

4. Procédé selon l'une des revendications précédentes, **caractérisé en ce que** l'émission ou la transmission d'énergie s'effectue dans le cas de bobines de chauffage par induction (16) dont on ne sait pas si leur zone de chauffage (17) est recouverte par un récipient de cuisson (27), est répétée fréquemment et/ou régulièrement, en particulier à une fréquence ou à un intervalle de temps inférieur à 1 minute, en particulier inférieur à 5 secondes, afin de détecter les récipients de cuisson (27) placés dans la zone de chauffage (17).

5. Procédé selon l'une des revendications précédentes, **caractérisé en ce que** l'émission ou la transmission d'énergie des bobines de chauffage par induction (16) pour la détection de récipients de cuisson (27) disposés dans la zone de chauffage (17) a lieu au moins également dans le cas où un changement de recouvrement d'une zone de chauffage (17) par un récipient de cuisson (27) est détecté.

6. Procédé selon l'une des revendications précédentes, **caractérisé en ce que** le procédé n'est mis en œuvre que lorsqu'un récipient de cuisson (27) avec une bobine de réception (32) selon la revendication 2 et avec un dispositif d'émission (42) a été détecté sur la plaque de cuisson à induction (13), le récipient de cuisson (27) comportant de préférence également un circuit intégré (40) et au moins un capteur (36).

7. Procédé selon l'une des revendications précédentes, **caractérisé en ce qu'**un codage est constitué d'impulsions, dont au moins deux impulsions forment la au moins une séquence d'impulsions, les impulsions étant générées avec une fréquence de fonctionnement ou la fréquence de résonance d'un circuit oscillant avec la bobine de chauffage par induction (16), une impulsion comportant une ou plusieurs oscillations, de préférence d'une durée totale comprise entre 0,1 µsec et 50 µsec, en particulier entre 10 µsec et 25 µsec.

8. Procédé selon l'une des revendications précédentes, **caractérisé en ce que**, lors de la commande de toutes les bobines de chauffage par induction (16) pour transmettre de l'énergie afin de détecter des récipients de cuisson (27) disposés dans la zone de chauffage (17), de l'énergie est d'abord transmise pendant un court instant sous forme d'impulsion, puis il y a une pause, puis, au cours d'un nombre variable de courtes séquences de transmission d'énergie et de pause ou en attendant un multiple déterminé d'un temps d'attente qui est en particulier compris entre 5% et 20% de la durée des codages, une pluralité de codages différents est générée et chacune des bobines de chauffage par induction (16) est commandée avec un codage différent, mais chaque bobine de chauffage par induction (16) est commandée de manière récurrente avec le même codage pour envoyer ou transmettre de l'énergie avec ce codage.

9. Procédé selon l'une des revendications précédentes, **caractérisé en ce que** la commande (18) enregistre quel récipient de cuisson (27) est disposé dans la zone de chauffage (17) de quelle bobine de chauffage par induction (16), la commande reconnaissant de la même manière les récipients de cuisson (27) disposés dans une zone de chauffage (17) d'une bobine de chauffage par induction (16) de la même manière.

10. Procédé selon l'une des revendications précédentes, **caractérisé en ce qu'**aucun codage n'est envoyé ou transmis tant qu'une bobine de chauffage par induction (16) n'enregistre aucun changement ou mouvement de ce récipient de cuisson (27) dans sa zone de chauffage (17) après la détection et l'attribution d'un récipient de cuisson (27) en modifiant les paramètres de fonctionnement du circuit oscillant avec la bobine de chauffage par induction (16), la transmission d'un codage à cette bobine ou à toutes les bobines de chauffage par induction (16) ne reprenant que lorsqu'un changement ou un mouvement du récipient de cuisson (27) est détecté dans sa zone de chauffage (17), de préférence par une bobine de chauffage par induction (16) ou par d'autres capteurs.

11. Procédé selon l'une des revendications précédentes, **caractérisé en ce que** toutes les bobines de chauffage par induction (16) commencent simultanément à transmettre un codage sous forme d'émission d'énergie.

12. Procédé selon l'une des revendications précédentes, **caractérisé en ce que** chaque codage comporte d'abord une impulsion ou une brève transmission d'énergie à des fins de synchronisation, et qu'à partir de cette impulsion de synchronisation, chaque bobine de chauffage par induction (16) présente un codage différent.

13. Procédé selon la revendication 12, **caractérisé en ce que**, dans tous les codages, au moins deux autres impulsions suivent l'impulsion de synchronisation à un intervalle de temps donné et que le nombre d'impulsions suivantes correspond à une numérotation des bobines de chauffage par induction (16), l'intervalle de temps étant de préférence le même dans un codage jusqu'à la dernière impulsion avant l'impulsion de synchronisation suivante.

14. Procédé selon l'une des revendications précédentes, **caractérisé en ce que** le dispositif d'émission (42) transmet une information traitée, en particulier directement un numéro de la bobine de chauffage par induction (16) comme désignation ou la position de la bobine de chauffage par induction (16) sur la plaque de cuisson à induction (13) sous la forme d'au moins deux séquences d'impulsions qui ont été évaluées à partir du codage reçu par une bobine de chauffage par induction (16), l'évaluation étant de préférence effectuée dans le dispositif d'émission (42), la position de la bobine de chauffage par induction (16) sur la plaque de cuisson à induction (13) étant notamment transmise sous forme de coordonnées x/y.

15. Plaque de cuisson à induction (13) conçue pour mettre en œuvre le procédé selon l'une des revendications précédentes, la plaque de cuisson à induction (13) comportant plusieurs bobines de chauffage par induction (16), au moins une zone de chauffage (17) étant associée à chaque bobine de chauffage par induction (16).
